Europäisches Patentamt

European Patent Office

Office européen des brevets

(11) Publication number: **0 415 518 A2**

# EUROPEAN PATENT APPLICATION

(21) Application number: 90306407.9

(22) Date of filing: 12.06.90

(51) Int. Cl.5: **G11B 20/10**, G11B 7/013, //H04N5/85

(30) Priority: 28.08.89 JP 222382/89

(43) Date of publication of application:
06.03.91 Bulletin 91/10

(84) Designated Contracting States:
DE FR GB

(71) Applicant: PIONEER ELECTRONIC CORPORATION
No. 4-1, Meguro 1-chome
Meguro-ku Tokyo 153(JP)

(72) Inventor: Okuda, Yoshiyuki, c/o Pioneer Tokorozawa Plant
2610, Hanazono 4-chome
Tokorozawa-City, Saitama(JP)

(74) Representative: Sturt, Clifford Mark et al
MARKS & CLERK 57-60 Lincoln's Inn Fields
London WC2A 3LS(GB)

(54) Signal recording apparatus and signal reproducing apparatus.

(57) A signal recording/reproducing apparatus is adapted to generate n sets of divided pulse-train signals from a modulated pulse-train signal bearing an intelligence signal and record the generated signals in n different tracks, and in which it is adapted such that the n pulse-train signals to be read from the n tracks are multiplied together and thereafter the modulated pulse-train signal is demodulated, and therefore, the apparatus is enabled to record a broadband signal.

# FIG. 1

TV SIGNAL (20MHZ) — a → [ 1 FM MODULATOR ] — b → [ 2 SIGNAL DIVIDER ] — c, d → [ 3 RECORD ]

## SIGNAL RECORDING APPARATUS AND SIGNAL REPRODUCING APPARATUS

The present invention relates to a signal recording apparatus for recording an intelligence signal on an information recording medium and a signal reproducing apparatus for reproducing an intelligence signal from a medium with information recorded.

An optical disk (including a magneto-optical disk and a phase-change type optical disk) used for optically recording/reproducing information is provided with pits or the like, as the units of information storage domains, arranged thereon in concentric or spiral tracks, with the information recorded in the form of difference in lengths of the pits and intervals therebetween. Reading of the recorded information is accomplished by irradiating the surface having information recorded of the optical disk with a light beam and then by demodulating the reflected light beam, modulated by the presence and absence of the pits, from the recorded surface.

Conventionally, in such a signal recording/reproducing apparatus, a light beam in the form of a beam spot, whose diameter is virtually equal to the width of the pit, is allowed to irradiate the surface having information recorded such that the light beam spot follows the record track formed of trains of pits and read the recorded information.

In such a prior art apparatus, when a signal with a very great bandwidth such as that of a high quality television signal is to be recorded, the apparatus will be adapted to support it by having the number of revolutions of the disk increased or the pit size made smaller. However, such arrangements do not work well since there are technical limits in increasing the number of revolutions of the disk or making the size of pit smaller, and in addition, such arrangements increase the cost of manufacture of the recording/reproducing apparatus.

Accordingly, a primary object of the present invention is to provide a signal recording/reproducing apparatus capable of recording a broadband signal keeping the number of revolutions of the disk and the size of the pit virtually at the existing levels.

In order to achieve the above mentioned object, the signal recording apparatus of the present invention comprises pulse modulation means for providing a modulated pulse-train signal modulated by an intelligence signal, signal dividing means for generating n sets of divided pulse-train signals, each divided pulse-train signal having its pulse width extending from each of successive n pulse edges of the modulated pulse-train signal to the next but or beyond (n - 1) pulse edges, and signal recording means for recording the divided pulse-train signals in their respective information recording tracks on an information recording medium.

Further, a signal reproducing apparatus of the present invention comprises signal reading means for reading recorded signals from a plurality of tracks on a recorded medium having an intelligence signal recorded along the plurality of tracks thereby generating read pulse-train signals from their respective tracks, signal processing means performing exclusive OR operation on all the read pulse-train signals thereby obtaining a pulse-train signal, and signal demodulating means for demodulating the pulse-train signal.

In the described arrangement, the signal dividing means of the signal recording apparatus divides a demodulated pulse-train signal, which, for example, is FM modulated by an intelligence signal, into n pulse-train signals, and supplies the n divided pulse-train signals, each thereof having its frequency component existing in a lower frequency domain than that of the modulated pulse-train signal, to the signal recording portion. The signal recording portion records the n divided pulse-train signals in different tracks on an information recording medium.

On the other hand, the signal reproducing apparatus reads recorded signals from the plurality of tracks on the medium with information recorded, virtually at the same time, subjects the read pulse-train signals restored from the recorded signals to arithmetic operation so that these are multiplied together and a multiplied pulse-train signal corresponding to the modulated pulse-train signal is obtained, and demodulates this multiplied pulse-train signal to reproduce the original intelligence signal.

An embodiment of the present invention will now be described by way of example only and with reference to the accompanying drawings, in which :-

FIG. 1 is a block diagram showing a signal recording apparatus of the present invention;

FIG. 2 is a diagram for explaining signal waveforms at various points in the signal recording apparatus shown in FIG. 1;

FIG. 3 is a block diagram showing a signal reproducing apparatus of the present invention;

FIG. 4 is a drawing for explaining tracks on a medium with information recorded;

FIG. 5 is a concrete example of an arithmetic circuit in FIG. 3;

FIG. 6 is a diagram for explaining signal wave forms at various points in the signal reproducing apparatus shown in FIG. 3;

FIG. 7 is a drawing showing an example structure of a pickup used in a signal reproducing apparatus; and

FIG. 8 is a drawing for explaining operation of the pickup shown in FIG. 7.

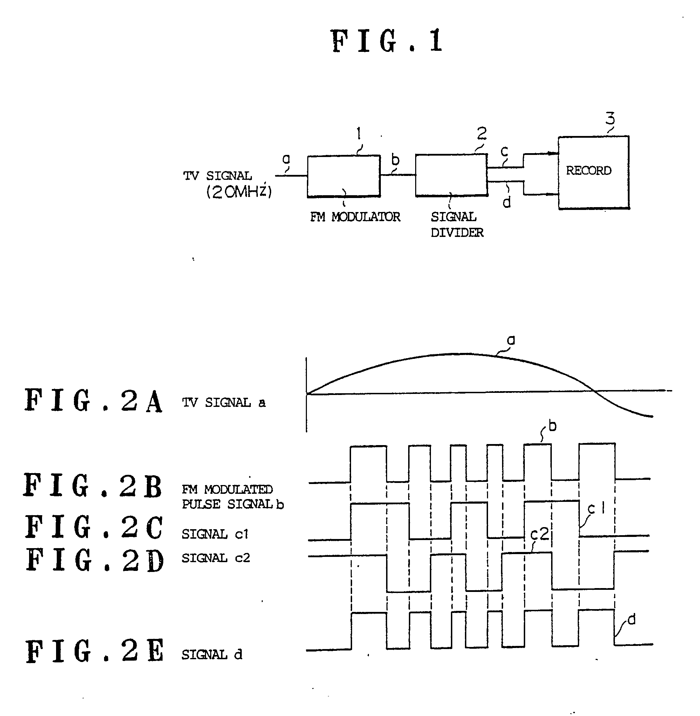

FIG. 1 shows a signal recording system, in which a high definition television signal (hereinafter, to be briefly called "TV signal") including a luminance signal whose signal bandwidth is 20 MHz is supplied, for example, as the intelligence signal to an FM modulator 1. The FM modulator 1 obtains an FM modulated video signal by frequency modulating a carrier signal having a frequency of 30 MHz, for example, by the TV signal $a$ as shown in FIG. 2A, and then, slices the FM modulated video signal at a predetermined level and applies the signal thus obtained to a wave shaping treatment, thereby generating an FM modulated pulse signal $b$ as shown in FIG. 2 B. The FM modulated pulse signal is converted by a signal divider 2 into a plurality of pulse-train signals having larger pulse spacings than the FM modulated pulse signal.

More specifically, when the FM modulated pulse signal $b$ is divided into two pulse signals, it is, for example, divided, as shown in FIG. 2 C and FIG. 2 D, into one pulse signal $c_1$ having high levels and low levels recurring in response to the rise of the modulated pulse signal $b$ and therefore having the pulse width extending from one pulse edge to the next but or beyond one pulse edge, and the other pulse signal $c_2$ having low levels and high levels recurring in response to the fall of the FM modulated pulse signal $b$ and therefore having the pulse width extending from one pulse edge to the next but one pulse edge. When the divided pulse signals $c_1$ and $c_2$ are processed to be multiplied together, the resultant pulse signal $d$ becomes equivalent to the FM modulated pulse signal $b$ as shown in FIG. 2 E. In the multiplication process, it is adapted such that the result becomes high when the pulse signals $c_1$ and $c_2$ are at the same level (including the case where even number of signals are at low level) are multiplied together. The signal divider 2 is structured, for example, of frequency dividers formed of flip-flops, logic gates, etc.

The thus obtained pulse signals $c_1$ and $c_2$, each thereof having the pulse width and pulse spacing virtually twice as large as that of the FM modulated pulse signal $b$ , are supplied to a recording portion 3 for forming the pits in the disk. The recording portion 3 is made up of a driving portion for rotating the disk at a fixed speed and an optical system including two light modulators for turning two light beams to be introduced to the recording surface of the disk on and off, independently, and the pulse signals $c_1$ and $c_2$ are respectively supplied to modulating input terminals of the two light modulators. Thus, TV signals are recorded in two tracks adjoining each other on the disk.

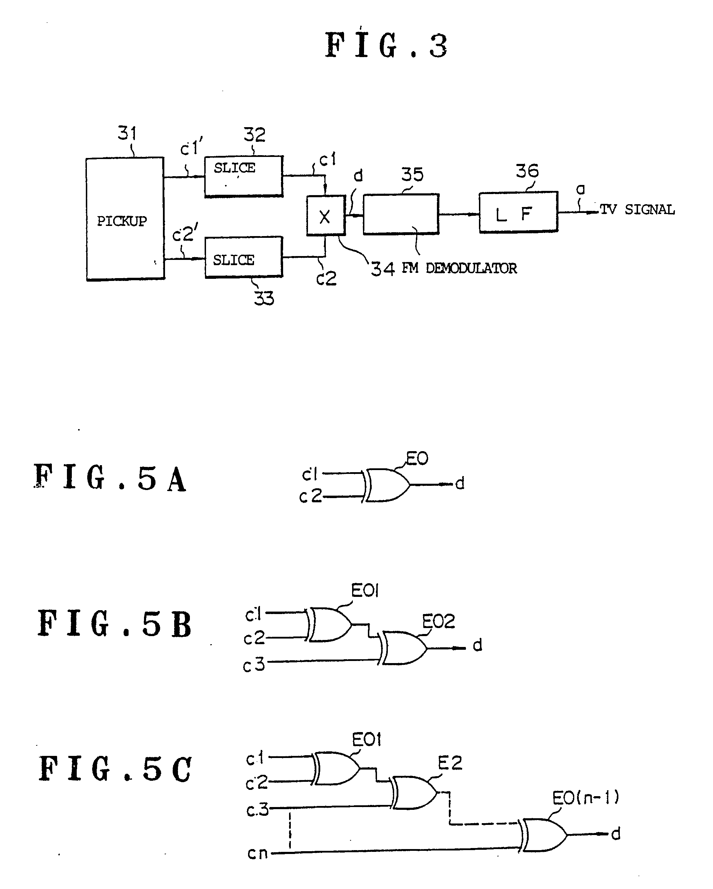

The signal reproducing system will be described with reference to FIG. 3.

FIG. 3 shows a signal reproducing apparatus, in which a pickup 31 irradiates two adjoining tracks A and B on the recorded surface of a disk as shown in FIG. 4 with two light beam spots $B_1$ and $B_2$ aligned along the radial direction of the disk and obtains from the reflected light beams two read signals $c_1{'}$ and $c_2{'}$ modulated by presence or absence of pits $P_A$ and $P_B$. Though not particularly shown, the light beam spots $B_1$ and $B_2$ are allowed to make accurate tracking with a predetermined spot diameter by means of focus servo, tracking servo, and so on. The read signals $c_1{'}$ and $c_2{'}$ are respectively supplied to slice circuits 32 and 33 to be shaped into the form of pulse signal, and thereby, pulse signals $c_1$ and $c_2$ are restored. The two pulse signals are subjected to exclusive OR operation in an arithmetic unit 34 whereby the pulse signal $e$ as shorn in FIG. 2 E is obtained. In the operation, a high level signal is output when the two pulse signals are at the same level and a low level signal is output when the two signals are at different levels. The pulse signal $d$ has virtually the same waveform as that of the original FM modulated pulse signal $b$ . The pulse signal $d$ is demodulated by an FM demodulator 35 into the TV signal $a$ and led out to an output terminal after being passed through an LPF (low pass filter) 36 with a cutoff frequency of 20 MHz, for example, so that only the TV signal band is passed with higher harmonic components eliminated.

FIG. 5 A to FIG. 5 C show concrete circuit examples of the arithmetic unit 34 in FIG. 3, in which FIG. 5 A shows the circuit example in the case of two inputs formed of one exclusive OR gate EO, FIG. 5 8 shows the circuit example in the case of three inputs formed of exclusive OR gates EO1 and EO2, and FIG. 5C shows the circuit example in the case of four inputs or above formed of exclusive OR gates EO1 to EO($n$ - 1).

In the described manner, an FM modulated pulse signal obtained by FM modulating a carrier signal by an intelligence signal with a great signal bandwidth is divided into two pulse-train signals, whereby signals with a signal frequency bandwidth virtually one half the original bandwidth are obtained, the two pulse-train signals are recorded on the same disk in two different tracks, and, at the time of signal reproduction, the two recorded signals are read from the disk along the two tracks and the read signals are combined so that the FM modulated pulse signal is restored, and the FM modulated pulse signal is FM demodulated and thereby the original intelligence signal is reproduced. Therefore, an intelligence signal having a great signal bandwidth such as a high definition television signal can be recorded on a disk without making the size of the pits recorded on the disk smaller or increasing the number of revolutions of the disk.

In the above described embodiment, to narrow the frequency band of a signal to be recorded on a disk, an FM modulated pulse signal is divided into two pulse signals and then these signals are recorded. By so doing, a merit is obtained that crosstalk which occurs when adjoining plural tracks are simultaneously read can be reduced. This will be described in the following.

Representing the frequency of the recorded signal by $f_S$, the carrier frequency of the FM modulator by $f_C$, an amplitude constant by v, and time by t, the read signal $c_1'$ is expressed as

$$v \sin\{2\pi (f_C/2)t + \phi (t)\},$$

where $\phi (t) = \sin 2\pi \cdot f_S \cdot t$.

The read signal $c_2'$, the phase of its carrier wave being shifted by 90 degrees, is expressed as

$$v \cos\{2\pi (f_C/2)t + \phi (t)\}.$$

Supposing now that there is present crosstalk between the read signals $c_1'$ and $c_2'$ with a coefficient k (< 1), the read signals $c_{1'T}$ and $c_{2'T}$ including the crosstalk are expressed as

$$c_{1'T} = v \sin\{2\pi (f_C/2)t + \phi (t)\} + k v \cos\{2\pi (f_C/2)t + \phi (t)\},$$

$$c_{2'T} = v \cos\{2\pi (f_C/2)t + \phi (t)\} + k v \sin\{2\pi (f_C/2)t + \phi (t)\}.$$

When the product of the signals $c_{1'T}$ and $c_{2'T}$ is obtained before the FM demodulation is performed in the reproducing system,

$$c_{1'T} \cdot c_{2'T}$$
$$= v^2(1 + k^2) \sin \{2\pi\{f_C/2)t + \phi (t)\}$$
$$\cdot \cos \{2\pi (f_C/2)t + \phi (t)\}$$
$$+ kv^2 [\sin^2\{2\pi (f_C/2)t + \phi (t)\}$$
$$+ \cos^2\{2\pi (f_C/2)t + \phi (t)\}].$$

Since $\sin^2\alpha + \cos^2\alpha = 1$,

$$c_{1'T} \cdot c_{2'T}$$
$$= v^2(1 + k^2) \sin\{2\pi (f_C/2)t + \phi (t)\}$$
$$\cdot \cos\{2\pi (f_C/2)t + \phi (t)\} + kv^2$$
$$= (1 + k^2) c_1' \cdot c_2' + kv^2.$$

Thus, it is clear that the output is multiplied by $(1 + k^2)$ and a mere offset of $kv^2$ is increased as compared with the values in the state where there is no cross talk. In other words, through the multiplication, the crosstalk can be restricted to the degree as described above as against the case where the two recorded signals are read out of two adjoining tracks and these signals are demodulated as they are.

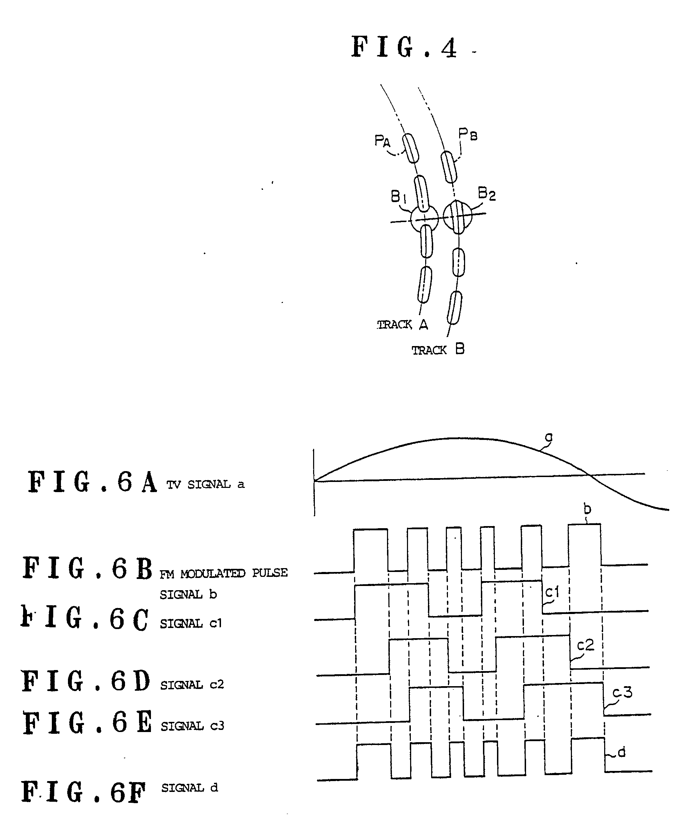

FIG. 6 shows a case where an FM modulated pulse signal b is divided into three pulse signals $c_1$, $c_2$ and $c_3$, the pulse signals $c_1$ to $c_3$ are respectively recorded in three adjoining different tracks on a disk, and the pulse signals $c_1$ to $c_3$ restored on the reproducing side are multiplied together, whereby a pulse signal d (= FM modulated pulse signal b ) is obtained. In FIG. 6, like signals to those in FIG. 2 are denoted by corresponding reference characteristics. In the above case, the waveform of the pulse signal $c_1$ rises at the timing of the rise of a first pulse edge of the FM modulated pulse signal b and falls at the timing of the fall of the next but two pulse edge. The waveform of the pulse signal $c_2$ rises at the timing of the fall of a second pulse edge of the FM modulated pulse signal b and falls at the timing of the rise of the next but two pulse edge. The wave form of the pulse signal $c_3$ rises at the timing of the rise of a third pulse edge of the FM modulated pulse signal b and falls at the timing of the fall of the next but two pulse edge.

By such arrangement, it becomes possible to make the signal bandwidth of the signals $c_1$ to $c_3$ still smaller than that of the signals $c_1$ and $c_2$ recorded in two tracks as shown in FIG. 1 and FIG. 2.

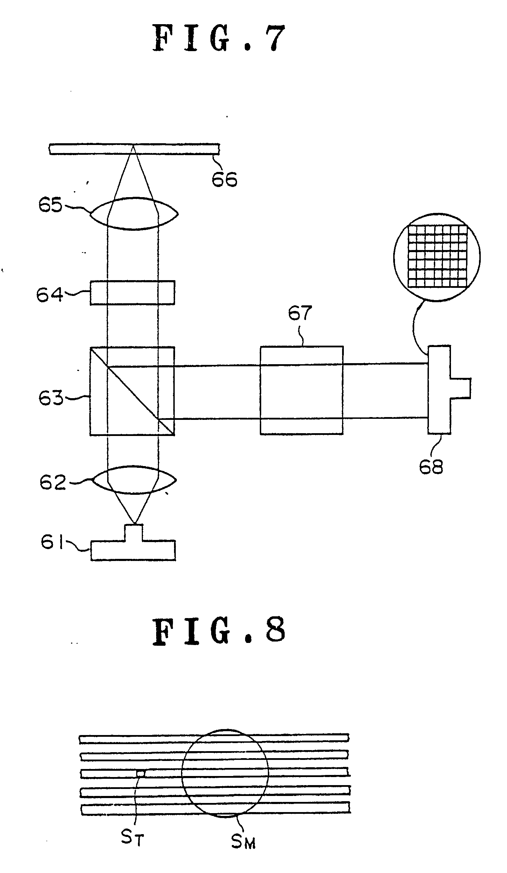

As described in the foregoing, it is possible to divide a signal to be recorded into two or more signals and record these plural signals in plural tracks, but the pickup for reading the signals from the tracks becomes complex in structure. The present applicant proposed in Japanese Patent Application No. 1-123432 a structure of a pickup suitable for use in such case, outline of which is shown in FIG. 7.

Referring to FIG. 7, a laser beam emitted from a laser diode 61 is converted to a parallel beam through a collimator lens 62 and, after being passed through beam splitter 63 and a quarter wave (1/4 λ) plate 64, it is caused by an objective lens 65 to irradiate, as the main beam spot for reading information, the surface with information recorded of an optical disk 6. The reflected beam of the irradiating beam from the recorded surface is passed through the objective lens 65 and the quarter wave plate 64 and reflected by the beam splitter 63, and then, it is passed through an optical device for detection 67 to be led onto a photosensor device 68.

With described arrangement, the diameter of the main beam spot in an in-focus state in the present optical system is made large enough to cover a plurality of tracks, as against that in the conventional optical system being virtually equal to the width of the pit, and the photosensor device 68 is formed of a plurality of photosensor elements arranged, for example, two-dimensionally, so that the photosensor device 68 senses light in its field of view uniformly.

Further, to achieve tracking servo, an auxiliary beam spot as the tracking beam spot $S_T$ is formed as shown in FIG. 8. The tracking beam spot $S_T$ is arranged to precede the information reading main beam spot $S_M$ in a predetermined relative position therewith. By means of a control operation performed based on the beam spot $S_T$, the center of the main beam spot $S_M$ is kept to follow the target track, i. e., the central track of the n (n≥ 2) tracks which the main beam spot $S_M$ should cover.

Thus, simultaneous reading of n tracks on the disk, the so-called multitrack reading, is performed.

Although the embodiment was described above as to its application to an optical recording disk, the present invention can be applied to a capacitance type recording disk (VHD), a multichannel CD, a magnetic tape, a card, and other analogous recording media having a plurality of tracks.

In the signal recording apparatus of the present invention as described in the foregoing, it is adapted such that a modulated pulse train signal bearing an intelligence signal is divided into n trains of pulses, each pulse thereof having a pulse width extending from one pulse edge to the next but (n - 1) pulse edges, and the divided pulse-train signals are recorded in different tracks, and therefore, an intelligence signal having a great bandwidth such as a high definition television signal can be recorded on the signal recording portion without the need for adapting the signal recording portion for recording of a great bandwidth.

Further, in the signal reproducing apparatus of the present invention, it is adapted such that the pulse-train signals read out from a plurality of tracks on the recorded medium together are subjected to exclusive logical operation and then to waveform shaping, and thereafter, a broadband signal is reproduced. Therefore, it is not required to adapt the signal reading system including the pickup for the use of a great bandwidth, and in addition, the effect of crosstalk occurring between adjoining tracks, which is liable to become problem in multitrack reproduction, can be suppressed. In other words, since there is little effect of the crosstalk, it is made possible to make the distance between tracks smaller and, hence, to increase storage capacity of the information recording medium. Further, since the signal is subjected to detection after undergoing the arithmetic operation, while demodulation systems in number corresponding to the number of channels required in a frequency division multiplex recording apparatus in the prior art, such an advantage can also be obtained that only one each of filter and TBC (time base correction) circuit is required in the present invention.

**Claims**

1. A signal recording apparatus comprising:
pulse modulation means for providing a modulated pulse-train signal modulated by an intelligence signal;
signal dividing means for generating n sets of divided pulse-train signals, each divided pulse-train signal having its pulse width extending from each of successive n pulse edges of said modulated pulse-train signal to the next but (n - 1) pulse edges; and
signal recording means for recording said divided pulse-train signals in their respective information recording tracks on an information recording medium.

2. A signal recording apparatus according to claim 1, wherein said pulse modulation means is adapted to slice an FM signal at a predetermined level and convert the signal into a rectangular wave.

3. A signal reproducing apparatus comprising:
signal reading means for reading recorded signals from a plurality of tracks on an recorded medium having an intelligence signal recorded along the plurality of tracks thereby generating read pulse-train signals from their respective tracks;
signal processing means making exclusive OR operation on all said read pulse-train signals thereby obtaining a pulse-train signal; and
signal demodulating means for demodulating said pulse-train signal.

4. A signal reproducing means according to claim 3, wherein said signal reading means is formed of light beam generating means for generating a reading light beam to form information detection points juxtaposed to each other on said recorded medium and means for converting an optical modulation which said reading light beam suffers from said recorded medium into an electric signal.

5. A signal reproducing means according to claim 3, wherein said signal reading means is formed of light beam irradiating means for irradiating a single light beam to cover a plurality of tracks on said recorded medium and photosensor means including a plurality of photosensor elements for receiving a reflected light beam from said recorded medium.

# FIG.1

FIG.2A  TV SIGNAL a

FIG.2B  FM MODULATED
        PULSE SIGNAL b
FIG.2C  SIGNAL c1
FIG.2D  SIGNAL c2

FIG.2E  SIGNAL d

# FÍG.3

# FIG.5A

# FIG.5B

# FIG.5C

# F I G . 4 -

P_A   P_B

B_1   B_2

TRACK A
TRACK B

F I G . 6 A TV SIGNAL a

F I G . 6 B FM MODULATED PULSE
SIGNAL b

F I G . 6 C SIGNAL c1

F I G . 6 D SIGNAL c2

F I G . 6 E SIGNAL c3

F I G . 6 F SIGNAL d

a

b

c1

c2

c3

d

# FIG.7

66

65

64

67

63

68

62

61

# FIG.8

$S_T$      $S_M$